# EUROPÄISCHE PATENTSCHRIFT

(11) **EP 0 396 129 B1**
(45) Veröffentlichungstag und Bekanntmachung des Hinweises auf die Patenterteilung: **08.09.1993**
(21) Anmeldenummer: 90108346.9
(22) Anmeldetag: 03.05.1990
(51) Int. Cl.: E03F 5/10, F16K 31/30

(54) **Abflussmengenregler**
Sewage regulator
Régulateur d'écoulement d'eaux

(30) Priorität: 04.05.1989 DE 3914703
(43) Veröffentlichungstag der Anmeldung: 07.11.1990
(73) Patentinhaber: Steinhardt, Lothar, Dipl.-Ing., D-65232 Taunusstein (DE)
(72) Erfinder: Steinhardt, Lothar, Dipl.-Ing., D-65232 Taunusstein (DE)
(74) Vertreter: Quermann, Helmut, Dipl.-Ing.

(56) Entgegenhaltungen:
- DE-A- 3 240 902
- FR-A- 2 522 771

## Beschreibung

Die Erfindung betrifft einen Abflußmengenregler für Ausläufe aus Flüssigkeitsbehältern, insbesondere Regenrückhalteräumen, mit einer Blende, die über der Auslauföffnung vertikal beweglich geführt und über Übertragungselemente mit einem Schwimmer bewegungsschlüssig verbunden ist, wobei die Übertragungselemente zumindest ein um eine ortsfeste Drehachse schwenkbar gelagertes Steuerelement mit Steuerkurve aufweisen und mit dem Steuerelement eine Schwimmerstange drehfest verbunden ist, sowie die Steuerkurve bewegungsschlüssig über eine Trägerstange oder direkt mit der Blende zusammenwirkt.

Ein derartiger Abflußmengenregler ist aus der DE-A-32 40 902 bekannt. Bei diesem ist das Steuerelement kraftschlüssig mit der Schwimmerstange verbunden und es weist eine Trägerstange mit einer Abwinklung auf, mittels der sie auf dem Steuerelement reitet, deren Kante die Steuerkurve bildet. Am unteren Ende der Trägerstange hängt die Blende. Aufgrund der Charakteristik der Steuerkurve ergibt sich eine definierte Abblendung der Auslauföffnung in Abhängigkeit vom Schwimmerniveau und damit vom Flüssigkeitspegel. Es besteht somit bei dem bekannten Abflußmengenregler keine Möglichkeit, die durchfließende Menge unabhängig von der Charakteristik der Steuerkurve zu ändern. Nachteilig ist bei dem bekannten Abflußmengenregler ferner, daß dort das mit der Blende zusammenwirkende Führungselement nur einseitig beaufschlagt mit dem Steuerelement zusammenwirkt und somit der Schwimmer nur im Sinne einer Hubbewegung die Blende beaufschlagt, nicht jedoch im Sinne einer Senkbewegung.

Es ist Aufgabe der vorliegenden Erfindung, einen Abflußmengenregler der genannten Art zu schaffen, bei dem unabhängig von der durch die Steuerscheibe vorgegebenen Durchflußcharakteristik die Möglichkeit besteht, die Durchflußmenge zu beeinflussen, wobei gleichzeitig sichergestellt sein soll, daß die Blende in allen Betriebsstellungen über das Steuerelement definiert angesteuert wird.

Gelöst wird die Aufgabe dadurch, daß die Übertragungselemente ferner einen um eine ortsfeste Achse schwenkbar gelagerten, zweiarmigen Hebel unterschiedlicher Hebelarmlänge, zur Aufnahme der Trägerstange bzw. Blende in einem Hebelarm und der kraftschlüssigen Verbindung des zweiten Hebelarms mit dem Steuerelement, umfassen, wobei der zweite Hebelarm ein Führungselement aufweist, das zug- und druckübertragend in der Steuerkurve des Steuerelementes geführt ist.

Wesentlich ist für die vorliegende Erfindung, daß der zweiarmige Hebel nicht nur zwei gleichlange Hebelarme aufweist und damit ausschließlich der Übertragung der Bewegung des Schwimmers auf die Blende dient, sondern die unterschiedlich langen Hebelarme eine Über- bzw. Untersetzung der über das Steuerelement eingeleiteten Bewegung ermöglichen. Die Steuerkurve des Steuerelementes gibt damit die Steuercharakteristik vor, während sich in Abhängigkeit der Hebelarmlänge bzw. Hebelarmlängenverhältnisse unterschiedliche Durchflußmengen ergeben. Ein und dieselbe Grundausstattung bezüglich der Steuercharakteristik läßt sich infolgedessen auf unterschiedliche Durchflußanforderungen projizieren. Die Durchflußmengen können durch verschiedene bauliche Ausgestaltungen des Abflußmengenreglers verändert werden. So sieht eine bevorzugte Ausführungsform der Erfindung vor, daß das Hebelarmlängenverhältnis des zweiarmigen Hebels variabel ist, was beispielsweise durch eine längenveränderliche Ausbildung des ersten und/oder zweiten Hebelarmes des Hebels bewerkstelligt werden kann. Entsprechendes ist auch möglich, wenn ein Hebel konstanter Länge bezüglich der ortsfesten Achse in Längsrichtung verschiebbar ist oder sogar die Lagerachse für den Hebel konstanter Länge sowohl in Längsrichtung des Hebels als auch im Lager für den Hebel, beispielsweise in einer an einer Auslaufwand befestigten Halteplatte verschiebbar ist. Schließlich kann auch die Trägerstange längenveränderlich ausgebildet sein. Die vorstehend genannten Ausgestaltungen bewirken damit eine Über- bzw. Untersetzung der Bewegung von Schwimmer und Blende, daneben kann auch der Angriffspunkt des Hebels an der Trägerstange aus der Symmetrieachse der Blende herausverlagert werden, das heißt näher zum Lagerpunkt des Hebels hin oder weiter entfernt von diesem, so daß sich hierdurch auch die Bewegung der Blende im Verhältnis zu der des Schwimmers variieren läßt. Ein besonders großes Variationsspektrum ergibt sich, wenn der Hebel insgesamt oder zumindest der erste Hebelarm als in der Schwenkebene des Hebels angeordnete Scheibe ausgebildet ist, die mit einem Loch- oder Schlitzraster zur Aufnahme der Trägerstange bzw. Blende und der Lagerachse des Hebels versehen ist. Das Raster ermöglicht es, die Trägerstange bzw. Blende gemäß dem Spektrum der vorgegebenen Löcher bzw. Schlitze in einem beliebigen Abstand vom Drehpunkt des Hebels anzuordnen und vereint damit alle Eigenschaften der zuvor genannten Verstellmöglichkeit des zweiarmigen Hebels und der Längenveränderlichkeit der Trägerstange, die zudem gegebenenfalls entfallen kann. Die Löcher bzw. Schlitze sollten auch der variablen Aufnahme des Lagerelementes, das heißt der ortsfesten Achse des Hebels bzw. der Scheibe dienen, womit sich die Variationsbreite auch noch auf die Lagerung des Hebels erstreckt. Das Schlitzraster sollte zweckmäßig aus mehreren, im wesentlichen radial um die Drosselblende gekrümmten und gegebenenfalls übereinander angeordneten Schlitzen oder Führungen gebildet sein. In gewünschtem Abstand vom Drehpunkt des Hebels und einer gedachten, durch die Längserstreckung des zweiten Hebelarms vorgegebenen Linie wird ein gelenkig mit der Trägerstange bzw. der Blende verbundener Lagerbolzen durch den betreffenden Schlitz bzw. das betreffende Loch gesteckt und mit der Scheibe fixiert.

Ein weiteres wesentliches Element der vorliegenden Erfindung ist in der zug- und druckübertragenden Lagerung zwischen dem zweiten Hebelarm bzw. dessen Führungselement und dem Steuerelement zu sehen, die bewirkt, daß eine Hubbewegung des Schwimmers zwangsläufig zu einer Senkbewegung der Blende führt und umgekehrt. Konstruktiv kann diese Führung beispielsweise so ausgebildet sein, daß die Steuerkurve durch einen kurvenförmigen Schlitz im Steuerelement gebildet ist, in den der zweite Hebelarm mit dem Führungselement eingreift. Es liegt darüber hinaus im Rahmen der vorliegenden Erfindung, zum Zweck der Veränderung der Durchflußcharakteristik, mehrere unterschiedlich ausgebildete Steuerscheiben nebeneinander anzuordnen in die das Führungselement des Hebels wahlweise einsteckbar ist.

Der erfindungsgemäße Abflußmengenregler kann an unterschiedlichsten Stellen des Flüssigkeitsbehälters installiert sein. Gedacht ist dabei in erster Linie an eine Anordnung des Abflußmengenreglers vor der Auslaufwand des Flüssigkeitsbehältes, denkbar ist jedoch auch eine Anordnung hinter der Ablaufwand. Es wird darüber hinaus für zweckmäßig erachtet, daß die Lagerelemente des Abflußmengenreglers, das heißt die Lagerelemente des Hebels und des Steuerelementes in einer mit der Auslaufwand des Flüssigkeitsbehälters befestigbaren Halteplatte gelagert sind, wobei eine Abdeckhaube vorteilhaft diese Platte und die mit ihr verbundenen Elemente umschließt. Im Zusammenhang mit der Anordnung der Lagerelemente in einer Halteplatte sieht eine besondere Ausführungsform der Erfindung vor, daß auch die Lagerelemente des Hebels und des Steuerelementes relativ zueinander verstellbar in der Halteplatte gehalten sind. Durch diese Maßnahme kann durch entsprechende Änderung der Abstände der Lagerelemente gleichfalls die Durchflußmenge variiert werden.

Weitere Merkmale der Erfindung sind in der Beschreibung der Figuren und in den Unteransprüchen dargestellt.

In den Figuren 1 bis 5 ist die Erfindung an mehreren Ausführungsformen beispielsweise dargestellt, ohne auf diese Ausführungsformen beschränkt zu sein. Es zeigt:
- Figur 1: eine erste Ausführungsform eines an einer Auslaufwand eines Flüssigkeitsbehälters angebrachten Abflußmengenreglers in einer Stirnansicht der Auslaufwand,
- Figur 2: den Abflußmengenregler gemäß Figur 1 in einer Draufsicht,
- Figur 3: eine besondere Ausführungsform des zweiarmigen, scheibenförmigen Hebels mit einem als Lochraster ausgebildeten ersten Hebelarm,
- Figur 4: eine weitere Ausführungsform des zweiarmigen, scheibenförmigen Hebels mit einem als Schlitzraster ausgebildeten zweiten Hebelarm und
- Figur 5: eine Abwandlung des in Figur 4 gezeigten Hebels mit abgeknicktem zweiten Hebelarm.

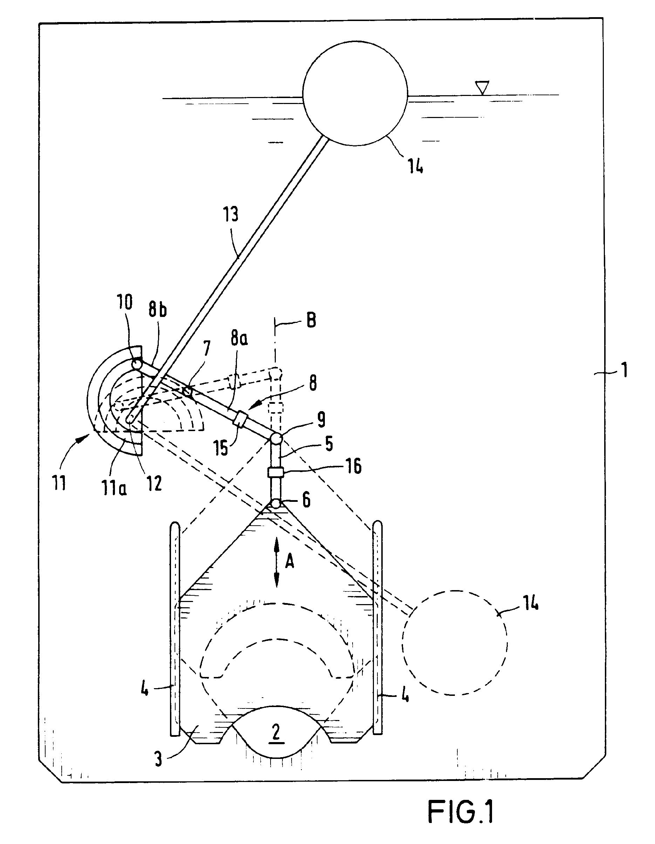

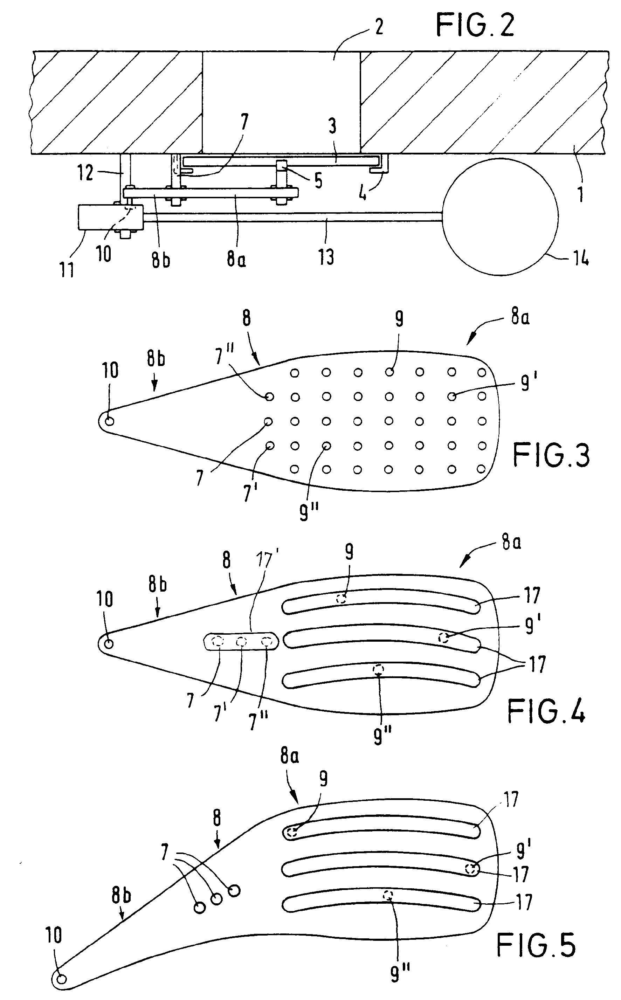

Die Figuren 1 und 2 zeigen eine Auslaufwand 1 mit einer Auslauföffnung 2, über der eine Blende 3 in seitlichen Führungen 4 vertikal geführt ist. Die Blende 3 ist - auf die Austrittsrichtung der Flüssigkeit bezogen - vor der Auslauföffnung 2 angeordnet. Eine Trägerstange 5 greift über ein Gelenk 6 oben an der Blende 3 an. In einem mit der Auslaufwand 1 verbundenen Lagerbolzen 7 ist ein Hebel 8 schwenkbar gelagert. Der Hebel 8 weist zwei unterschiedlich lange Hebelarme 8a und 8b auf, der erste Hebelarm 8a ist im Bereich seines dem Lagerbolzen 7 abgewandten Endes über ein Gelenk 9 mit der Trägerstange 5 verbunden. Der zweite Hebelarm 8b ist etwa halb so lang wie der erste Hebelarm 8a und weist an seinem freien Ende eine Führungsrolle 10 auf. Auf der Seite des Hebelarmes 8b des Hebels 8 ist ein Steuerelement 11 in einem Lagerbolzen 12 schwenkbar gelagert, der entsprechend dem Lagerbolzen 7 fest mit der Auslaufwand 1 verbunden ist. Mit dem Steuerelement 11 ist eine Schwimmerstange 13 drehfest verbunden, die an ihrem dem Steuerelement abgewandten Ende einen Schwimmer 14 aufnimmt. Im Steuerelement 11 ist eine Steuerkurve durch einen um den Lagerbolzen 12 laufenden kurvenförmigen Schlitz 11a oder dgl. gebildet, in den die Führungsrolle 10 des zweiten Hebelarmes 8b eingreift.

Die Figur 1 verdeutlicht eine Schließ- und eine Öffnungsposition des Abflußmengenreglers, die Schließposition gibt sich aus den durchgezogenen Linien, die Öffnungsposition aus den gestrichelten Linien. Ausgehend von der geöffneten Stellung führt ein Ansteigen des Flüssigkeitspegels zu einer Hubbewegung des Schwimmers 14 und damit zu einer Schwenkbewegung der Schwimmerstange 13 entgegen dem Uhrzeigersinn, infolge der drehfesten Verbindung der Schwimmerstange 13 mit dem Steuerelement 11 wird dieses gleichfalls entgegen dem Uhrzeigersinn verschwenkt, wobei die Führungsrolle 10 in Längsrichtung des Schlitzes 11a abrollt, dessen Breite geringfügig größer ist als der Durchmesser der Führungsrolle 11a, so daß sie relativ reibungslos bewegt werden kann. Die Bewegung der Führungsrolle 10 in Längsrichtung des Schlitzes 11a bewirkt eine Schwenkbewegung des Hebels 8 im Uhrzeigersinn, womit die Blende 3 nach unten bewegt wird und die Auslauföffnung 2 stärker abblendet. Bei einer Verminderung des Flüssigkeitsniveaus liegen die umgekehrten kinematischen Verhältnisse vor.

Durch die Schlitzführung der Führungsrolle 10 im Steuerelement 11 ist eine zug- und druckübertragende Bewegung zwischen Schwimmer 14 und Blende 3 gewährleistet.

Die Krümmung der Steuerkurve des Schlitzes 11a gibt die Abblendcharakteristik des Abflußmengenreglers vor. Ergänzend hierzu ist die Durchflußmenge durch die Auslauföffnung 2 durch die Länge der Hebelarme 8a und 8b sowie die Länge der Trägerstange 5 beeinflußbar. Eine Vergrösserung der Länge des ersten Hebelarmes 8a bei gleichbleibender Länge des zweiten Hebelarms 8b führt bei gleichem Schwenkwinkel des Hebels 8 zu einem vergrößerten Stellweg der Blende 3 im Sinne des Doppelpfeiles A. Eine Vergrößerung der Länge der Trägerstange 5 führt bei gleichbleibenden Hebelarmlängen 8a und 8b bei gleichem Wasserstand zu einer größeren Abblendung der Auslauföffnung 2. Um die Variationsbreite des Abflußmengenreglers zu vergrößern, ist bei der Ausführungsform nach der Figur 1 der erste Hebelarm 8a und die Trägerstange 5 mit einem Spannschloß 15 bzw. 16 versehen, die jeweils eine Längenänderung des ersten Hebelarmes 8a bzw. der Trägerstange 5 ermöglichen. Die vorliegende Erfindung ist dabei keinesfalls darauf beschränkt, daß der Gelenkpunkt des Gelenkes 9 im wesentlichen auf der Mittellinie B der Blende 3 zu liegen kommt, die Länge des ersten Hebelarmes 8a kann vielmehr bewußt so gewählt werden, daß dieser Gelenkpunkt immer zwischen dem Lagerbolzen 7 und der Linie B liegt oder immer auf der dem Lagerbolzen 7 abgewandten Seite der Linie B.

Die Variationsbreite der vorliegenden Erfindung verdeutlichen beispielhaft die Figuren 3 bis 5. Die Figur 3 verdeutlicht einen scheibenförmigen Hebel 8, bei dem der Bereich des ersten Hebelarmes 8a als Lochraster ausgebildet ist. Die Löcher 7, 7' und 7'' bilden variable Aufnahmen für den jeweiligen Lagerbolzen des Hebels 8, die Löcher 9, 9', 9'' usw. als variable Aufnahmen für das die Verbindung zur Trägerstange 5 bildende Gelenk. Es ist jedoch im Sinne der Erfindung nicht erforderlich, daß eine Trägerstange 5 mit dem Hebel 8 verbunden ist, es besteht gleichfalls die Möglichkeit, die Blende 3 unmittelbar am ersten Hebelarm 8a anzulenken, womit die Lagerstellen der Gelenke 6 und 9 zusammenfallen. Figur 4 verdeutlicht die Ausbildung des ersten Hebelarms 8a als Schlitzraster mit drei radial um die Drosselblende gekrümmten, übereinander angeordneten Schlitzen 17, die sich somit im wesentlichen in Längsrichtung des Hebels 8 erstrecken. Jeder der Schlitze 17 dient der Aufnahme der Gelenke 9, 9' und 9'' in beliebigen Schlitzpositionen. In unmittelbarer Nähe zum mittleren Schlitz 17 ist zwischen diesem und der Führungsrolle 10 ein gerader Schlitz 17' zur Aufnahme des Lagerbolzens vorgesehen, gezeigt sind drei mögliche Positionen 7, 7' und 7''. Über nicht näher dargestellte Befestigungsmittel werden der jeweilige Lagerbolzen 7 bzw. 7' bzw. 7'' und das jeweilige Gelenk 9 bzw. 9' bzw. 9'' fest mit dem ersten Hebelarm 8a verbunden. Figur 5 zeigt eine Ausführungsform, die sich an der Darstellung der Figur 4 orientiert. Dort sind jedoch drei feste Lagerpunkte für den Lagerbolzen 7 vorgesehen, die drei Schlitze 17 für das jeweilige Gelenk 9 bzw. 9' bzw. 9'' verlaufen unter einem Winkel zur Längserstreckung des zweiten Hebelarmes 8b.

## Patentansprüche

1. Abflußmengenregler für Ausläufe aus Flüssigkeitsbehältern, insbesondere Regenrückhalteräumen, mit einer Blende (3), die über der Auslauföffnung (2) vertikal beweglich geführt und über Übertragungselemente (5,8,10,13) mit einem Schwimmer (14) bewegungsschlüssig verbunden ist, wobei die Übertragungselemente zumindest ein um eine ortsfeste Drehachse (12) schwenkbar gelagertes Steuerelement (11) mit Steuerkurve (11a) aufweisen und mit dem Steuerelement (11) eine Schwimmerstange (13) drehfest verbunden ist, sowie die Steuerkurve (11a) bewegungsschlüssig über eine Trägerstange (5) oder direkt mit der Blende (3) zusammenwirkt,
**dadurch gekennzeichnet,** daß die Übertragungselemente (5, 8, 10, 13) ferner einen um eine ortsfeste Achse (7) schwenkbar gelagerten, zweiarmigen Hebel (8) unterschiedlicher Hebelarmlänge, zur Aufnahme der Trägerstange (5) bzw. Blende (3) in einem ersten Hebelarm (8a) und der kraftschlüssigen Verbindung des zweiten Hebelarms (8b) mit dem Steuerelement (11), umfassen, wobei der zweite Hebelarm (8b) ein Führungselement (10) aufweist, das zug- und druckübertragend in der Steuerkurve (11a) des Steuerelementes (11) geführt ist.

2. Abflußmengenregler nach Anspruch 1, **dadurch gekennzeichnet,** daß das Hebelarmlängenverhältnis des zweiarmigen Hebels (8) variabel ist.

3. Abflußmengenregler nach Anspruch 2, **dadurch gekennzeichnet,** daß der erste (8a) und/oder der zweite Hebelarm (8b) des Hebels (8) längenveränderlich ist.

4. Abflußmengenregler nach Anspruch 2, **dadurch gekennzeichnet,** daß der Hebel (8) bezüglich der ortsfesten Achse (7) in Längsrichtung des Hebels (8) verschiebbar ist.

5. Abflußmengenregler nach Anspruch 4, **dadurch gekennzeichnet**, daß die ortsfeste Achse (7) in deren Lagerelement verschiebbar ist, insbesondere in Längsrichtung des Hebels (8).

6. Abflußmengenregler nach einem der Ansprüche 1 bis 5 , **dadurch gekennzeichnet,** daß die Trägerstange (5) längenveränderlich ist.

7. Abflußmengenregler nach einem der Ansprüche 1 bis 6, **dadurch gekennzeichnet,** daß zumindest der erste Hebelarm (8a) als in der Schwenkebene des Hebels (8) angeordnete Scheibe ausgebildet ist, die mit einem Loch- oder Schlitzraster zur Aufnahme der Trägerstange (5) bzw. Blende (3) versehen ist.

8. Abflußmengenregler nach einem der Ansprüche 1 bis 7, **dadurch gekennzeichnet,** daß der Hebel (8) insgesamt als Scheibe ausgebildet ist.

9. Abflußmengenregler nach Anspruch 7. oder 8, **dadurch gekennzeichnet,** daß das Schlitzraster aus mehreren, im wesentlichen radial um die Blende (3) gekrümmten und parallel übereinander angeordneten Schlitzen (17) gebildet ist.

10. Abflußmengenregler nach einem der Ansprüche 1 bis 9, **dadurch gekennzeichnet,** daß die Steuerkurve durch einen kurvenförmigen Schlitz (11a), eine Führung oder dgl. im Steuerelement (11) gebildet ist, in den der zweite Hebelarm (8b) mit dem Führungselement (10) eingreift.

11. Abflußmengenregler nach Anspruch 10, **dadurch gekennzeichnet,** daß das Führungselement als Führungsrolle (10) ausgebildet ist.

12. Abflußmengenregler nach einem der Ansprüche 1 bis 11, **dadurch gekennzeichnet,** daß die Lagerelemente (7, 12) des Hebels (8) und des Steuerelements (11) in einer mit der Auslaufwand (1) des Flüssigkeitsbehälters befestigbaren Halteplatte gelagert und relativ zueinander verstellbar in dieser gehalten sind.

## Claims

1. A discharge amount regulator for outflows from liquid containers, particularly rainwater retention spaces, with a damper (3) which is movably guided over the outflow opening (2) and is connected with positive transmission of movement via transmission elements (5, 8, 10, 13) to a float (14), wherein the transmission elements comprise at least one control element (11) with a radial cam (11a), pivotally mounted about a fixed axis of rotation (12), and a float rod (13) is attached rotationally fixed to the control element (11), and the radial cam (11a) cooperates with the damper (3) directly or with positive transmission of movement via a support rod (5), characterised in that the transmission elements (5, 8, 10, 13) further comprise a two-armed lever (8) with different arm lengths and pivotally mounted about a fixed axis (7) for receiving the support rod (5) or damper (3) in a first lever arm (8a) and with a non-positive attachment of the second lever arm (8b) to the control element (11), wherein the second lever arm (8b) has a guide element (10), which is guided in the radial cam (11a) of the control element (11) so that it transmits tension and compression.

2. A discharge amount regulator according to claim 1, characterised in that the lever arm length ratio of the two-armed lever (8) is variable.

3. A discharge amount regulator according to claim 2, characterised in that the length of the first (8a) and/or the second (8b) lever arm of the lever (8) can be varied.

4. A discharge amount regulator according to claim 2, characterised in that the lever (8) can be displaced with respect to the fixed axis (7) in the longitudinal direction of the lever (8).

5. A discharge amount regulator according to claim 4, characterised in that the fixed axis (7) can be displaced in its bearing element, particularly in the longitudinal direction of the lever (8).

6. An outflow regulator according to any one of claims 1 to 5, characterised in that the length of the support rod (5) can be varied.

7. A discharge amount regulator according to any one of claims 1 to 6, characterised in that at least the first lever arm (8a) is constructed as a plate disposed in the plane of pivoting of the lever (8), and is provided with a grid of holes or slots to receive the support rod (5) or damper (3).

8. A discharge amount regulator according to any one of claims 1 to 7, characterised in that the lever (8) is constructed overall as a plate.

9. A discharge amount regulator according to claim 7 or 8, characterised in that the grid of slots is constructed as a plurality of slots (17) curved substantially radially around the damper (3) and disposed parallel above one another.

10. A discharge amount regulator according to any one of claims 1 to 9, characterised in that the radial cam is formed by a curved slot (11a), a guide or the like in the control element (11), in which the second lever arm (8b) engages with the guide element (10).

11. A discharge amount regulator according to claim 10, characterised in that the guide element is constructed as a guide roller (10).

12. A discharge amount regulator according to any one of claims 1 to 11, characterised in that the bearing elements (7, 12) of the lever (8) and of the control element (11) are mounted on a mounting plate which can be secured to the outflow wall (1) of the liquid container and are held on the mounting plate so that they are adjustable in relation to each other.

## Revendications

1. Régulateur d'écoulement d'eaux de décharges de réservoirs remplis de liquide, en particulier de réservoirs de retenue d'eaux de pluie comportant un obturateur (3) mobile verticalement devant l'orifice d'écoulement (2) est relié un flotteur (14) par des éléments de transmission (5, 8, 10, 13) comprenant au moins un élément de commande (11) qui peut pivoter autour d'un axe fixe (12), qui porte une piste de commande (11a) et qui est solidaire en rotation d'une tige (13) du flotteur, la piste de commande (11a) étant reliée à l'obturateur (3) par une tige porteuse (5) ou en direct, caractérisé en ce que les éléments de transmission (5, 8, 10, 13) comprennent un levier (8) pivotant autour d'un axe fixe (7) et possédant deux bras d'inégales longueurs dont l'un (8a) est relié à la tige porteuse (3) ou l'obturateur (3) tandis que l'autre (8b) est relié à l'élément de commande (11) en coordination de mouvement, par l'intermédiaire d'un élément de guidage (10) qu'il porte et qui coulisse dans la piste de commande (11a) et transmet les mouvements en traction comme en poussée.

2. Régulateur de débit de décharge selon la revendication 1, caractérisé en ce que le rapport entre les longueurs du bras de levier (8) est variable.

3. Régulateur du débit de décharge selon la revendication 2, caractérisé en ce que la longueur du premier (8a) et/ou du deuxième (8b) bras du levier (8) est/sont variables en longueur.

4. Régulateur du débit de décharge selon la revendication 2, caractérisé en ce que le levier (8) peut coulisser, selon sa direction longitudinale, par rapport à l'axe fixe (7).

5. Régulateur du débit de décharge selon la revendication 4, caractérisé en ce que l'axe (7) peut se déplacer dans son élément porteur, en particulier selon la direction longitudinale du levier (8).

6. Régulateur du débit de décharge selon une des revendications 1 à 5, caractérisé en ce que la tige porteuse (5) est de longueur variable.

7. Régulateur du débit de décharge selon une des revendications 1 à 6, caractérisé en ce que le premier bras de levier (8a) au moins est constitué par un disque situé dans le plan d'oscillation du levier (8) et percé d'une série de trous ou de fentes pouvant recevoir la tige porteuse (5) ou l'obturateur (3).

8. Régulateur du débit de décharge selon une des revendications 1 à 7, caractérisé en ce que le levier (8) dans son entier est constitué par un disque.

9. Régulateur du débit de décharge selon la revendication 7 ou 8, caractérisé en ce que la série de fentes comprend plusieurs fentes (17) disposées selon des courbes sensiblement radiales autour de l'obturateur (3) et parallèles entre elles.

10. Régulateur de débit de réglage selon une des revendications 1 à 9, caractérisé en ce que la piste de commande est constituée par une rainure (11a) de forme courbe, un guide ou un organe analogue que porte l'élément de commande (11) et à travers lequel le second bras de levier (8b) est en prise avec l'élément de guidage (10).

11. Régulateur de débit de décharge selon la revendication 10, caractérisé en ce que l'élément de guidage (10) est constitué par un galet de guidage (10).

12. Régulateur du débit de décharge selon une des revendications 1 à 11, caractérisé en ce que les éléments porteurs (7, 12) du levier (8) et de l'élément de commande (11) sont montés sur une platine support qui peut être fixée sur la paroi (1) du réservoir portant l'orifice de décharge, avec possibilité de régler les positions de ces éléments porteurs sur cette platine.
